# EUROPEAN PATENT SPECIFICATION

(11) **EP 1 076 921 B1**
(45) Date of publication and mention of the grant of the patent: **02.07.2008**
(21) Application number: 99923614.4
(22) Date of filing: 07.05.1999
(51) Int. Cl.: H02K 1/27, H02K 21/24

(54) **Permanent magnet synchronous machine**
Dauermagnetsynchronmaschine
Machine synchrone à aimants permanents

(30) Priority: 08.05.1998 FI 981022
(43) Date of publication of application: 21.02.2001
(73) Proprietor: The Switch Electrical Machines Oy, 53850 Lappeenranta (FI)
(72) Inventor: Juha Pyrhönen, 53850 Lappeenranta (FI)
(74) Representative: Tanhua, Pekka Vilhelm
(86) International application number: PCT/FI1999/000380
(87) International publication number: WO 1999/059233

(56) References cited:
- EP-A1- 0 409 661
- PATENT ABSTRACTS OF JAPAN 25 September 1991 & JP 03 150 056 A (MITSUBISHI KASEI CORP)
- PATENT ABSTRACTS OF JAPAN 25 September 1991 & JP 03 150 033 A (MITSUBISHI KASEI CORP)
- DATABASE WPI Week 9533, Derwent Publications Ltd., London, GB; AN 95-250597 & JP 7 154 935 A (NIPPON SERVO KK) 16 June 1995

## Description

The present invention relates to a permanent magnet synchronous machine according to the preamble of claim 1. In particular, the invention relates to an axial flux permanent magnet synchronous machine, but the invention can also be applied to a radial flux permanent magnet synchronous machine.

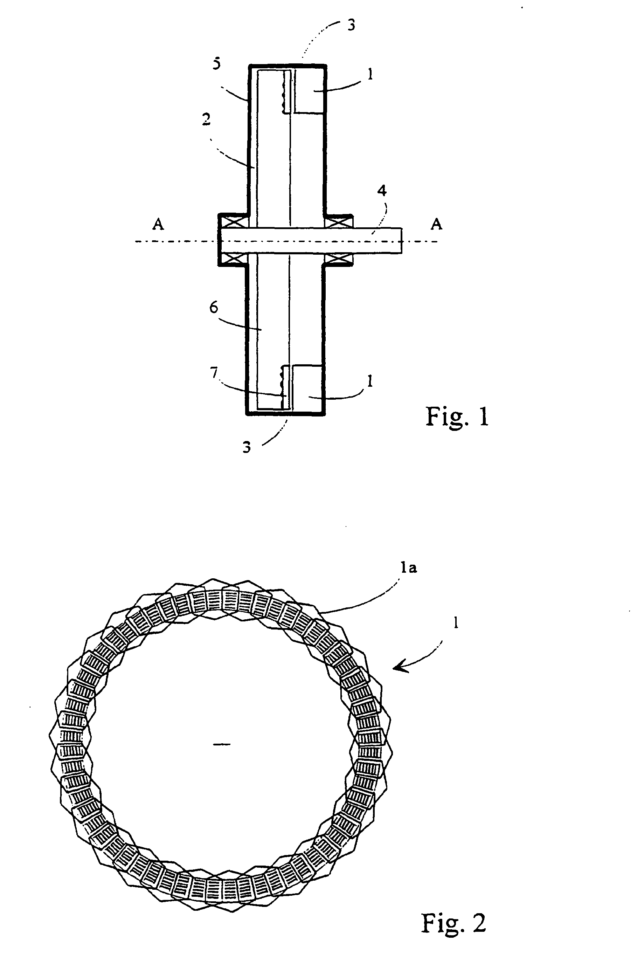

From the point of view of manufacturing technology, a permanent magnet synchronous machine having an axial magnet flux, i.e. an axial flux permanent magnet synchronous machine, is at its best when using large diameters. One such permanent magnet synchronous machine is illustrated in figure 1. The permanent magnet synchronous machine comprises a stator 1 and a rotor 2, and in between these there is provided an air gap 3 on a plane perpendicular to the rotary shaft 4, and said stator and rotor are arranged in the box 5 so that the rotor 2 and the connected rotary shaft 4 are free to rotate owing to the supplied AC current.

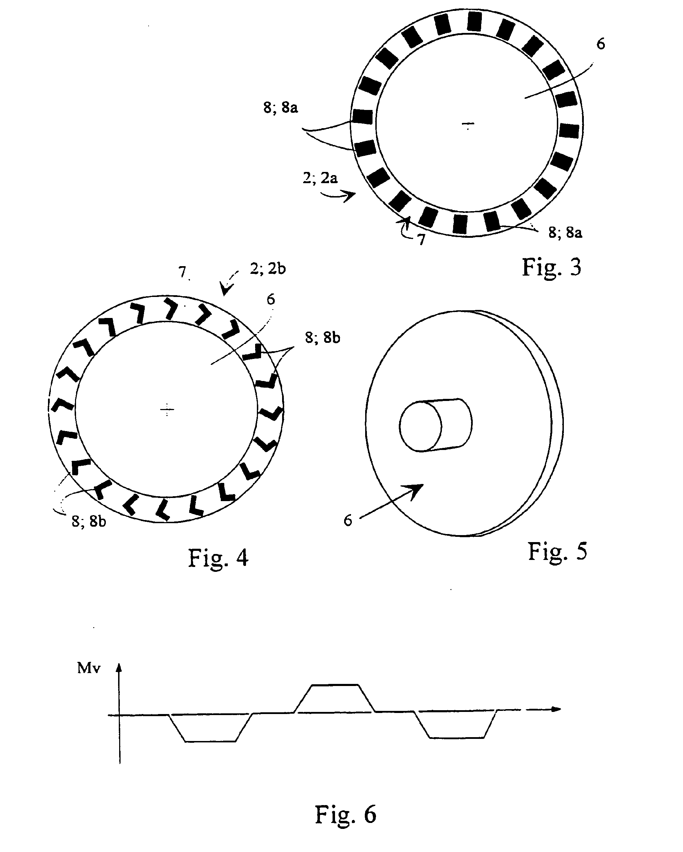

The magnetic circuit of an axial flux permanent magnet synchronous machine is not made of circular disks, as is the case with a permanent magnet synchronous machine having a radial flux, i.e. in a radial flux permanent magnet synchronous machine, but the stator 1, figure 2, is typically made by coiling of a strip, and in connection with the coiling process, in the strip there are die-cut grooves for the stator winding 1a, and the rotor 2 is made by employing as the housing 6, i.e. the body material, either a steel disk or - in a case of double stator motor - possibly some non-ferromagnetic material, such as aluminum. The permanent magnet pieces 8; 8a, 8b are glued onto the surface of said disk, as it is illustrated in figures 3 and 4, or in the non-ferromagnetic disc. On top of the body material of the rotor 2, there also can be attached a support matrix 7 made of some non-magnetic material - such as aluminum - i.e. a fastening means for the permanent magnet pieces, wherein there are cut locations for the homogeneously thick permanent magnet pieces 8; 8a, 8b, which are installed in said locations, so that their bottom surface is against the rotor body material and their top surface is directed towards the air gap 3 and on the same level with the surface of the support matrix 7. Said support matrix 7 serves both as a structure supporting the fastening of the permanent magnet pieces and as the damper winding of the machine, in case the material is conductive.

Commercially an axial flux permanent magnet synchronous machine, or an axial flux machine, is a very interesting alternative, because in low-speed arrangements it can be applied to replacing an inductive motor and gear system. Very flat, low-speed axial flux machines are employed for instance in elevators, where the motor is installed in the elevator well. In many practical applications, an even and well controlled torque is required of the electric operation. Particularly in the case of elevators, a basic requirement is a vibration-free torque. When a low-speed machine with extremely many poles is produced, the number of slot per pole and phase (q) remains low. Typically the number of slots per pole and phase q can be for instance q = 1. As a consequence, the flux generated by the stator contains a high rate of harmonic waves, which causes problems. If the permanent magnet pieces of the axial flux machine have such a form, or if they are installed so, that also the magnetic flux generated exclusively by them in the air gap between the stator and the rotor deviates from the sinusoidal pattern, in the electric torque of the machine there are created harmful harmonic torque ripple when supplying sinusoidal currents into the machine. Such factors resulting from the not so ideal character of the electric motor can be taken into account when using modem motor control systems but when aiming at an economical solution, it is pointed out that the boosting of the calculatory capacity of the motor control system leads to increased expenses.

With all rotating field machines, it would be advantageous to manufacture the rotor of the electric machine so that the magnetic flux generated by the magnetic pieces of the rotor would be sinusoidal in the air gap. This is achieved, among others, by means of technology known from radial flux servo machines, where permanent magnet pieces are placed on the surface of a cylindrical rotor, and the magnets themselves arc designed to generate the sinusoidal air gap field. One such solution is proposed in the US patent publication 4,748,359.

EP-A- 0544310 discloses a rotor comprising a plurality of permanent magnets, where each of the said permanent magnets is substantially prism shaped and has a substantially trapezoidal cross section rounded its corners defined by shorter sides of the trapetzoid, The purpose is to smooth rotation torque compared to rotor solution where claw poles axially extended from the outer circumference of the rotor and where axial dimensions of the claw poles vary in a sine wave fashion in the circumferential direction.

JP-A-01 122353 discloses a synchronous AC servomotor, where permanent magnet pieces are attached to the rotor. The magnet piece is provided with ends, whose width is narrower than the width of the central part of the magnet. The magnetic piece is built up of two (or even three) rectangular parts, but the side lines of the piece are strongly stepped. These kinds of piece shapes include the fifth and the seventh harmonic waves.

JP-A-03 222641 discloses a permanent magnet type synchronous motor, where trapezoid magnets are arranged in a rotor so that the upper and the lower bottoms of the adjacent magnets are in reverse direction. The magnet pieces have trapezoidal form as in document EP-A- 0544310. These kinds of shapes include at least fifth and seventh harmonic waves.

Magnets with curvy surface having, hence, an uneven thickness can also be applied to an axial flux machine, where the suitably shaped magnets, as regards their thickness, are glued onto the rotor plate surface, and thus the fluctuation of the air gap flux density is made sinusoidal, and there is achieved a smooth torque for the machine. However, a drawback is that in that case the physical air gap of the axial flux machine becomes uneven, and that the curvy magnets are expensive to manufacture, because their thickness should follow the sinusoidal pattern and accordingly be thin at the edges. Another drawback is that in this case, the use of a suitable support matrix is extremely difficult.

JP-A-57 180363 discloses a rotor magnet, which has a ring shape. The outer periphery of the rotor magnet is uneven. The rotor magnet includes a plurality of permanent magnet pieces, straight sides of which are radial and put tightly against each other so that ring shape has completed. The outer end of the magnet piece has an arc form, the radius of which arc is much smaller than the radius of the magnetic ring. The tops of the arcs are arranged on the outer periphery of the rotor magnet and so there are regularly arranged pits in the areas, where the outer ends meet the straight sides in one piece and the sides of the adjacent pieces meet each other. Further there are obtuse angles between the outer end and the straight sides of the piece, if we consider the pieces as separate parts. The shape of the pieces as well as sector pieces (as parts of magnetic ring) include at least fifth and seventh harmonic waves and produces, accordingly, harmful torque ripple.

Figures 3 and 4 illustrate two known rotor alternatives 2; 2a, 2b - the first 2a, provided with rectangular permanent magnet pieces 8a, and the second 2b, where the rectangular permanent magnet pieces are shaped as hook-like permanent magnet pieces 8b. Respectively the support matrix 7 conforms to the shape of said permanent magnet pieces 8a, 8b. When using homogeneously thick square permanent magnet pieces 8a which are glued onto the surface of the rotor 2a, the result is a simple and easy structure, but there arises the problem that the magnetic flux density effective in the air gap 3 is still non-sinusoidal, but it more or less corresponds to the curve shape illustrated in figure 6. This wave pattern deviates from the sinusoidal wave and thus contains harmonic waves. The problem is that owing to the described curvature of the air gap flux density, in the machine there are created so-called cogging torques as well as torques created in interaction with the armature winding harmonics and the rotor flux harmonics. It has been attempted to reduce the cogging torque by arranging the permanent magnet pieces 8; 8b of the rotor 2 at an inclined position with respect to the stator slots (as it is made in the rotor 2b of figure 4) in which case the cogging torque is decreased, but is generally not totally eliminated. Although by employing the inclined, rectangular permanent magnet pieces 8; 8a, 8b the cogging torque is reduced to almost insignificant, the harmonic torques together created by the harmonic current linkages of the stator and the harmonic flux components of the rotor still remain. Said harmonic torques are all the more stronger, the higher the armature current of the machine is.

In principle, the above described rotor construction is applied in EP-A-0734 112, which discloses a damper winding of an elevator motor. The motor comprises a stator and a discoidal rotor, to which a number of permanent magnets are attached. However, the shape of permanent magnets is not defined.

The object of the invention is to eliminate the drawbacks related to the above described permanent magnet synchronous machines. Another object of the invention is to achieve a new permanent magnet synchronous machine, particularly an axial or radial flux permanent magnet synchronous machine where the permanent magnet units of the rotor are permanent magnets that are easily produced and are designed to generate a virtually sinusoidal air gap flux density distribution.

The permanent magnet synchronous machine according to the invention is characterized by what is stated in the claim 1. The dependent claims refer to a few preferred embodiments of the invention.

A three-phase permanent magnet synchronous machine comprises a stator, a rotor and a regular air gap in between the stator and the rotor, said rotor includes a body made of steel or a corresponding magnetic material, and a number of permanent magnet units, which include a permanent magnet piece having two opposite sides in which piece the thickness between the sides is a constant, and a base the length of which, (the length of the permanent magnet unit and simultaneously the length of the permanent magnetic piece in the direction of the rotor circumference) is a second constant and corresponds essentially to the pole pitch, which permanent magnets units are magnetized so that the poles are located on opposite sides and that said permanent magnet units are fitted successively on the surface of the body with their side pointed to the air gap and the stator so that the poles alternate in turns. According to the invention the edge line of the side of the permanent magnet piece corresponds to the half-cycle form of a sine curve mixed with a third harmonic.

The basic idea of the invention is that there the thickness of the permanent magnet pieces of the rotor is constant, but the width of the permanent magnet pieces in the direction of the rotor circumference follows the sinusoidal pattern added by a third harmonic.

According to the invention, by applying modified sinusoidal permanent magnet pieces, in the air gap there is obtained a virtually sinusoidal flux density distribution, and thus also in the machine winding, there also is induced, by means of rotor magnetizing, a sinusoidal electro motive force. This is based on the realization that a magnetic flux generated by one permanent magnet unit, particularly a permanent magnet piece, penetrates the coil of the stator winding forming a sinusoidally varying flux linkage, although the air gap flux density, when observed narrowly in the proceeding direction of the rotor, the flux changes in the fashion of a rectangular pulse.

In a three-phase machine the sinusoidal pattern of the permanent magnet piece is modified by adding a third harmonic in the shape of the permanent magnet piece. The adding of a third harmonic in the sinusoidal pattern increases the electro motive force of the machine, because it adds a third wave that is induced to the phase voltages and thus increases the machine constant, but it does not, however, have any harmful effect in the case of a three-phase machine. In that case in the air gap of the permanent magnet synchronous machine, there still is no sinusoidal flux density, but the electro motive force of the machine armature is sinusoidal, and thus the permanent magnet current linkage of the rotor is virtually sinusoidal. When the elecro motive force and the armature currents are sinusoidal the rotating field machine creates a smooth torque if no cogging is present.

In the two most preferred embodiments of the invention, each permanent magnet unit includes two permanent magnet pieces. They are fitted in the housing adjacently in pairs, so that their bases face each other, or alternatively they are arranged in the housing adjacently in pairs so that their tips face each other. In both cases, the permanent magnet units are positioned symmetrically, and in the stator of the permanent magnet synchronous machine, there do not occur any such radial flux density components caused by the installation pattern of the permanent magnet units that should surpass the laminations. The direct and quadrature axis inductances of the machine are practically equal, so that the harmonic current linkages of the stator do not result in reluctance torques, and the machine is run with a smooth torque.

In theory, the width of the base of the permanent magnet piece according to the invention is equal to the pole pitch. In a machine having the number of slot per pole and phase *q* = 1, this means the width of three stator slot pitches, which means that the cogging torques remain fairly low. In practice the length of the base of a permanent magnet piece is thus advantageously somewhat shortened, so that in the above mentioned preferred embodiments of the invention, in between the permanent magnet units there is left a thin support matrix neck of the adjacent poles, which neck in the case of a theoretical magnet should be completely broken. Now the electrically conductive support matrix remains unbroken and serves as the damper winding.

By using a suitable stator structure and a sufficient damping, in the rotor there is obtained, when desired, a permanent magnet synchronous machine that may be used in a direct-on-line application. Damping is advantageous in other ways, too, because it prevents the air gap harmonics generated by the stator from penetrating into the rotor. When desired, the torque rises more rapidly in a damped machine than in a machine that is not damped. On the other hand it is true that when applying this kind of technology, where the permanent magnet units are installed on the rotor surface, the magnetizing inductance of the machine remains fairly low, and thus the machine in all cases reacts very rapidly to the control operations, unless the stator leakage is particularly large.

Another essential factor in the permanent magnet synchronous machine according to the invention is that the permanent magnet units can be placed in cavities of the support matrix, in which case they are easily fixed in place. When a suitable measure tolerance and a liquid adhesive as a shock absorber material are applied in between the cavities of the rotor support matrix and the permanent magnets, the permanent magnet pieces are easily fitted in the rotor cavities also when the permanent magnet pieces are magnetized in advance.

Another advantage of the invention is the readiness in controlling and adjusting the machine, which is due to the fact that in the air gap of the stator and the rotor, there is created a virtually sinusoidal magnetic flux distribution. By employing a structure where the rotor permanent magnet units create a virtually sinusoidal field in the air gap, there do not occur any harmonic torques caused by the machine structure to the same degree that would otherwise be the case. The magnetic air gap of the machine is long, and thus the magnetizing inductance is low, wherefore the load angle of the machine during operation is small. The permanent magnet synchronous machine according to the invention is also suited to be directly controlled by a frequency transformer based on winding flux control (Direct Torque Control), which in the basic form assumes the density distribution of the sinusoidal air gap flux.

It is also pointed out that the invention can be applied particularly to big radial flux permanent magnet synchronous machines, where in practice, no single magnet curvature is needed. There the large permanent magnet pole of the rotor, i.e. the permanent magnet unit or piece, is advantageously designed of e.g. several rectangular magnet elements or pieces placed on the rotor surface, so that the permanent magnet unit or piece forms an area or surface that is sinusoidal at the edge, and a third harmonic is added to the contours thereof.

Yet another advantage of the invention is that when desired, on top of the permanent magnets and the aluminum matrix, there can be installed, on the machine rotor surface, a uniform plate made of aluminum, brass or some other similar material, which serves as an additional damper in the air gap of the machine.

In a preferred embodiment of the invention, the permanent magnet pieces are fitted adjacently in the housing, so that the bases and the tips are pointed to opposite directions. In that case, in the electrically conductive support matrix there are left clear current paths, but the magnetic flux passes somewhat transversally to the stator lamination, which can result in harmful effects owing to the eddy currents in the stator lamination. In a low-speed machine this does not cause any significant harm.

In the specification below, the axial flux permanent magnet synchronous machine according to the invention is described in more detail with reference to the appended drawing, where
figure 1 is a side-view illustration of a prior art axial flux permanent magnet synchronous machine, seen in partial cross-section;
figure 2 is a schematic illustration of the stator of the permanent magnet synchronous machine of figure 1, seen in perpendicular direction to the rotary shaft;
figure 3 is a schematic illustration of the rotor of the permanent magnet synchronous machine of figure 1, seen in perpendicular direction to the rotary shaft;
figure 4 is a schematic illustration of the second rotor of the permanent magnet synchronous machine of figure 1, seen in perpendicular direction to the rotary shaft;
figure 5 is a schematic illustration of the housing of the permanent magnet synchronous machine illustrated in figure 1;
figure 6 illustrates the curve shape of the air gap flux density in a permanent magnet according to figure 1;
figure 7 is a perspective illustration of the permanent magnet piece of the rotor of a permanent magnet synchronous machine according to the invention;
figure 8 illustrates the permanent magnet piece of figure 7 when seen from the top in an xy coordinate system;
figure 9a is schematic front-view illustration of a part of the rotor of the axial flux permanent magnet synchronous machine according to the first embodiment of the invention;
figure 9b is a schematic front-view illustration of a part of the rotor of the radial flux permanent magnet synchronous machine according to the first embodiment of the invention;
figure 10a is schematic front-view illustration of a part of the rotor of the axial flux permanent magnet synchronous machine according to the second embodiment of the invention;
figure 10b is a schematic front-view illustration of a part of the rotor of the radial flux permanent magnet synchronous machine according to the second embodiment of the invention;
figure 11 is a schematic front-view illustration of a part of the rotor of the permanent magnet synchronous machine according to the invention; and
figure 12 is a perspective illustration of the support matrix of the rotor of the permanent magnet synchronous machine according to figure 11.

The prior art permanent magnet synchronous machines illustrated in figures 1, 2, 3, 4, 5 and 6 are dealt with above, in the introduction part of the specification.

The permanent magnet synchronous machine according to the invention comprises a stator 1, a rotor 2 and a standard-size air gap 3 provided in between the stator 1 and the rotor 2. The rotor 2 comprises a housing 6 made of steel or some corresponding magnetic material, and a number of permanent magnet units, which are fitted successively on the surface of the housing 6, so that the poles N, S of the permanent magnet units alternate in turns. Thus the basic structure of the permanent magnet synchronous machine is known, and the above reference numerals refer to the figures illustrating the prior art machine applications.

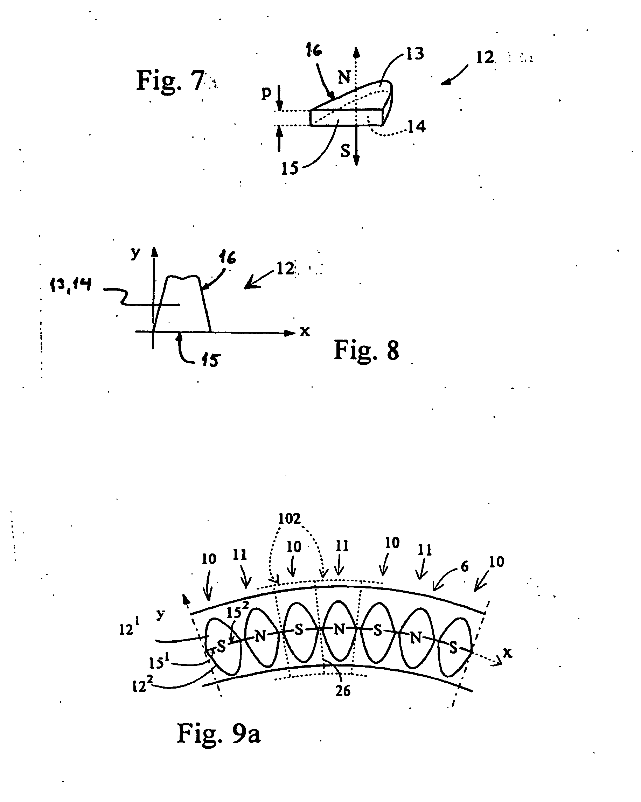

In particular, the invention relates to the permanent magnet unit 10, 11, for example figure 9a. Said unit comprises at least one permanent magnet piece 12, as it is illustrated in figures 7 and 8. The thickness p of the permanent magnet piece 12 is the first constant, the magnitude whereof depends on the particular application. The permanent magnet piece 12 has two sides 13, 14 with edge lines 16 located on opposite sides and a base 15. The length of the base 15 of the permanent magnet piece 12 i.e. the length of both sides 13, 14 in the direction x of the rotor circumference (cf. for example figure 9a) is the second constant and conforms to the pole pitch. The length of the circumference of the rotor 2 is divided by the number of the poles of the permanent magnet synchronous machine, which operation results in the length of the base 15 and accordingly in the length of the side 13, 14.

The length of the base 15 of the permanent magnet piece 12, and simultaneously also the length of the side of the permanent magnet unit 10, 11, essentially correspond to the pole pitch.

In their width y, both sides of the permanent magnet piece 12 and the edge line 16 conform to the arc of the half-cycle of the curve y = Asin (x) + Bsin (3x), as it is illustrated in figures 7 and 8. A and B are constants. When the constants A = 1 and B = any number (≠ 0) a third harmonic is mixed in the edge line 16 of the side 13, 14, and it deviates from the pure half-cycle form of the sine curve pattern.

The permanent magnet pieces 12 are magnetized so that the poles N, P are located on opposite sides 13, 14. The permanent magnet pieces 12 or units 10, 11 compiled thereof are fitted successively on the surface of the housing 6 of the rotor 2, so that the side 13 (or 14) is directed towards the air gap 3 and the stator 1.

The stator winding of a permanent magnet synchronous machine includes a number of stator coils, the number whereof corresponds to that of the poles. In the rotor, the stator coils 101 are replaced by the permanent magnet units, particularly the permanent magnet pieces 12. The stator coil 101 and the permanent magnet pieces 12 are located on separate planes, separated by the air gap, but in principle roughly parallel. When the permanent magnet piece 12 is shifted, along with the rotor, in the direction x (or -x), the magnetic flux generated thereby passes through the stator coil 101. It can be assumed that the permanent magnet piece 12 is formed of elements that in the direction of the axis x have the same length as the piece and in the direction y are very thin. Each element induces, by its magnetic flux, a voltage in the conductor parallel to the y-axis of the stator coil 101, so that the sum voltage of the conductor follows the sine curve at an optimal accuracy.

In a preferred embodiment of the invention regarding the axial flux permanent magnet synchronous machine, figure 9a, each permanent magnet unit 10, 11 corresponding to a pole comprises two permanent magnet pieces 12; 12¹, 12², which are fitted in the housing 6 of the rotor 2 adjacently in pairs, so that the bases 15; 15¹, 15² face each other. The magnetic south pole S of the first permanent magnet unit 10 is directed outwardly from the paper surface, and the north pole N points to the opposite direction, whereas the magnetic north pole N of the second parallel permanent magnet unit 11 is directed outwardly from the paper surface and the south pole S points to the opposite direction. Otherwise the units 10, 11 are similar. The stator winding of the permanent magnet synchronous machine is arranged so that in width, the stator coil 102 corresponding to a pole is equal to the length of the permanent magnet unit 10, 11, and of the same size as the pole interval.

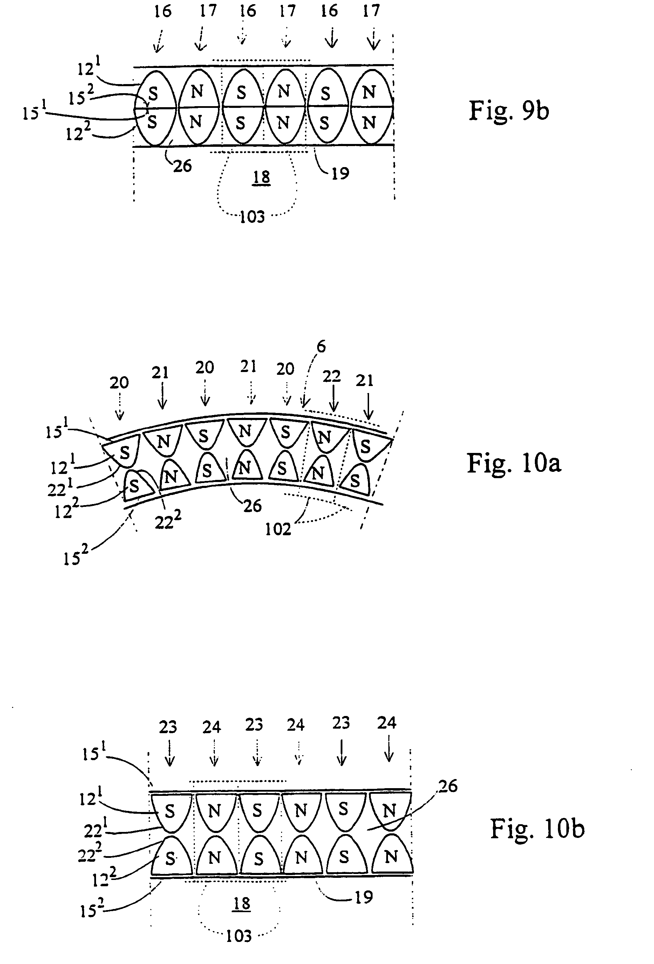

The above described embodiment is also suited to a radial flux permanent magnet synchronous machine, as is illustrated in figure 9b. Now the rotor is a cylinder, which is arranged to rotate around its longitudinal axis, and around said cylinder surface there are provided the air gap and the stator. The permanent magnet units 16, 17 are arranged in a belt 19 around the rotor cylinder surface 18, and the sides of the permanent magnet units 12 are directed towards the air gap. Advantageously there are several belts 19 placed adjacently. Also in this case each permanent magnet unit 16, 17 comprises two permanent magnet pieces 12; 12¹ 12², which are fitted in the housing 6 of the rotor 2 adjacently in pairs, so that the bases 15; 15¹, 15² face each other. Also in this case the magnetic south pole S of the permanent magnet unit 16 is pointed outwards from the paper surface, and the north pole N is pointed to the opposite direction, whereas the magnetic north pole N of the second parallel permanent magnet unit 17 is pointed outwards from the paper surface and the south pole S is pointed to the opposite direction. Otherwise the units 16, 17 are similar. The stator winding of the permanent magnet synchronous machine is advantageously arranged so that in width the stator coil 103 corresponding to the pole is equal to the length of the permanent magnet unit 16, 17 and of the same size as the pole pitch.

In another preferred embodiment of the invention as regards an axial flux permanent magnet synchronous machine, figure 10 a, each permanent magnet unit 20, 21 comprises two permanent magnet pieces 12; 12¹, 12², which are fitted in the housing 6 of the rotor 2 adjacently in pairs, so that their tips 22; 22¹, 22² face each other. Now the bases 15; 15¹, 15² of the permanent magnet pieces 12; 12¹, 12² are pointed away from each other. The magnetic poles S, N of the permanent magnet units 20, 21 alternate in turns, as was already described above. Otherwise the units 20, 21 are similar. The stator winding of the permanent magnet synchronous machine is advantageously arranged so that in width the stator coil 102 corresponding to the pole is equal to the length of the permanent magnet unit 20, 21 and of the same size as the pole pitch.

As regards the embodiment illustrated in figure 10a, it is also pointed out that the permanent magnet pieces 12¹, 12² of the same permanent magnet unit 20, 21 are scaled so that the length of the base 15² of the permanent magnet pieces 12² located on the inner rotor circumference, which naturally is shorter than the outer circumference, is shorter than the length of the base 15¹ of the permanent magnet pieces 12¹ located on the outer circumference of the rotor. Thus, when forming the rotor pole, there is taken into account the curvature of the machine and likewise the reduction in the pole distribution, and the sinusoidal permanent magnet pieces and/or permanent magnet units are dimensioned accordingly.

The above described embodiment can also be applied to a radial flux permanent magnet synchronous machine, as is illustrated in figure 10b. As regards the machine, the arrangement is analogical to the embodiment illustrated in figure 9b, and like reference numerals designate like parts. Also in this case each permanent magnet unit 23, 24 comprises two permanent magnet pieces 12; 12¹, 12², which are fitted in the housing 18 of the rotor adjacently in pairs, so that their tips 22; 22¹, 22² face each other and their bases 15; 15¹, 15² are pointed away from each other. In this embodiment, the permanent magnet pieces 15 are mutually similar. The magnetic poles S, N of the permanent magnet units 23, 24 alternate in turns, as was already described above. Otherwise the units 23, 24 are similar. Advantageously the stator winding is arranged in similar fashion as above, so that in width the stator coil 103 corresponding to the pole is equal to the length of the permanent magnet unit 23, 24 and to the pole distribution.

In the embodiments of figures 9a, 9b, 10a, 10b described above, the permanent magnet units 10, 11; 16, 17; 20, 21; 23, 24 are fitted in a support matrix 26, which is arranged on the surface of the rotor housing 6, 18. The support matrix 26 is realized of some non-magnetic material. The support matrix 26 is made of some electrically conductive material, advantageously aluminum, and it is arranged to form part of the damper winding of the permanent magnet synchronous machine.

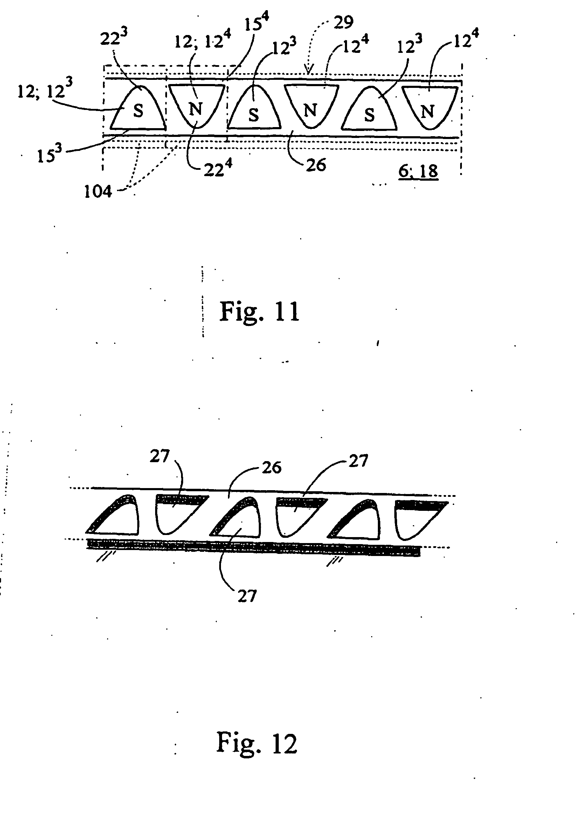

A third embodiment of the invention is illustrated in figure 11. Each permanent magnet unit only comprises one permanent magnet piece 12; 12³, 12⁴. The permanent magnet pieces 12; 12³, 12⁴ are fitted adjacently in the support matrix 26 arranged in the rotor housing 6, 18, so that the bases 15; 15³, 15⁴ and the tips 22; 22³ 22⁴ point to opposite directions. Now clear current paths are left in the support matrix 26. Otherwise the placing on the rotor is similar to the earlier embodiments. Most advantageously the stator winding is arranged in similar fashion as in the above described embodiments, so that the width of the stator winding 104 corresponding to the pole is equal to the pole distribution, and in length equal that of the permanent magnet piece 12; 12³, 12⁴. This form of application is suited both for axial and radial flux permanent magnet synchronous machines.

Figure 12 illustrates the support matrix 26. The permanent magnet pieces 12; 12³, 12⁴ are located in the cavities 27 provided in the support matrix 26 and are attached in place.

When desired, on top of the permanent magnet units 10, 11; 16, 17; 20, 21; 23, 24 and the support matrix 26, on the surface of the rotor 6, 18 of the permanent magnet synchronous machine, there can be additionally placed a uniform electrically conductive plate which is located on the rotor surface against the air gap and the stator winding. It is advantageously made of aluminum, brass or the like material and serves as additional damping in the air gap of the machine.

In the above specification, the permanent magnet synchronous machine according to the invention is described with reference to a few embodiments by way of example only, and it should be understood that certain modifications in the design can be carried out without departing from the scope of protection defined in the appended claims.

## Claims

1. A three-phase permanent magnet synchronous machine comprising a stator (1), a rotor (2) and a regular air gap (3) in between the stator and the rotor, said rotor (2) including a body (6, 18) made of steel or a corresponding magnetic material, and a number of permanent magnet units (10, 11; 16; 17; 20, 21; 23, 24; 12), which include a permanent magnet piece (12; 12¹, 12²) having two opposite sides (13, 14) so that the piece thickness (p) between the sides is a constant, and a base (15) which length, length of the permanent magnet unit and simultaneously the length of the permanent magnetic piece in the direction (x) of the rotor (2) circumference is a second constant and corresponds essentially to the pole pitch, the magnet units being magnetized so that the poles (N, P) are located on opposite sides (13, 14) and that said permanent magnet units are fitted successively on the surface of the body (6, 18) with their side pointed to the air gap (3) and the stator (1) so that the poles (N, S) alternate in turns, **characterized in that** the edge line (16) of the side (13, 14) of the permanent magnet piece corresponds to the half-cycle form of sine curve mixed with a third harmonic thereof.

2. A permanent magnet synchronous machine according to claim 1, **characterized in that** each permanent magnet unit (10, 11; 16; 17) includes two permanent magnet pieces (12¹, 12²), which are fitted in the rotor body (6, 18) adjacently in pairs, so that their bases (15; 15¹, 15²) face each other.

3. A permanent magnet synchronous machine according to claim 1, **characterized in that** each permanent magnet unit (20, 21; 23, 24) includes two permanent magnet pieces (12¹, 12²), which are fitted in the rotor body (6, 18) adjacently in pairs, so that their tips (22; 22¹, 22²) face each other.

4. A permanent magnet synchronous machine according to any of the claims 1 - 3, **characterized in that** the permanent magnet pieces (12; 12³) are fitted in the rotor body (6, 18) adjacently, so that the bases (15; 15³, 15⁴) and the tips (22; 22³, 22⁴) point to opposite directions.

5. A permanent magnet synchronous machine according to any of the preceding claims, **characterized in that** the permanent magnet units (10, 11; 16; 17; 20, 21; 23, 24; 12) are fitted in a support matrix (26) which is arranged on the surface of the rotor housing (6, 18), said support matrix (26) being realized of some non-magnetic material.

6. A permanent magnet synchronous machine according to claim 5, **characterized in that** the support matrix (26) is made of some electrically conductive material, advantageously aluminum, and that it is arranged to form part of the damper winding of the machine.

7. A permanent magnet synchronous machine according to claims 5 or 6, **characterized in that** on top of the support matrix (26) and the permanent magnet units (12; 12³, 12⁴), there is fitted a uniform plate (29) or the like, which is realized of some non-magnetic material, most advantageously electrically conductive material, advantageously aluminum or brass, and which is arranged to serve as the damper winding of the machine and/or as the protection for the permanent magnet material.

8. A permanent magnet synchronous machine according to any of the preceding claim, **characterized in that** the rotor body (6) is a disk-like plate.

9. A permanent magnet synchronous machine according to any of the preceding claim, **characterized in that** the rotor body (6) is cylindrical.

## Patentansprüche

1. Dreiphasen-Dauermagnetsynchronmaschine mit einem Stator (1), einem Rotor (2) und einem gleichmäßigen Luftspalt (3) zwischen dem Stator und dem Rotor, wobei der Rotor (2) einen Körper (6, 18), der aus Stahl oder einem entsprechenden magnetischen Material gefertigt ist, und eine Anzahl von Dauermagneteinheiten (10, 11; 16; 17; 20, 21; 23, 24; 12) enthält, welche ein Dauermagnetstück (12; 12¹, 12²) mit zwei gegenüberliegenden Seiten (13, 14), so dass die Stückdicke (p) zwischen den Seiten eine Konstante ist, und einer Grundseite (15) enthalten, deren Länge, Länge der Dauermagneteinheit und gleichzeitig die Länge des Dauermagnetstücks in der Richtung (X) des Umfangs des Rotors (2) eine zweite Konstante ist und im Wesentlichen der Pollänge entspricht, wobei die Magneteinheiten derart magnetisiert sind, dass die Pole (N, P) auf gegenüberliegenden Seiten (13,14) angeordnet sind und dass die Dauermagneteinheiten nacheinander auf die Oberfläche des Körpers (6, 18) mit ihrer Seite auf den Luftspalt (3) und den Stator (1) gezielt gefügt sind, so dass die Pole (N, S) der Reihe nach abwechseln, **dadurch gekennzeichnet, dass**
die Seitenlinie (16) der Seite (13, 14) des Dauermagnetstücks der Halbzyklusform einer Sinuskurve gemischt mit einer dritten Oberwelle dieser entspricht.

2. Dauermagnetsynchronmaschine nach Anspruch 1, **dadurch gekennzeichnet, dass** jede Dauermagneteinheit (10, 11; 16; 17) zwei Dauermagnetstücke (12¹, 12²) enthält, welche im Körper (6, 18) des Rotors paarweise benachbart angefügt sind, so dass ihre Grundseiten (15; 15¹, 15²) einander zugewandt sind.

3. Dauermagnetsynchronmaschine nach Anspruch 1, **dadurch gekennzeichnet, dass** jede Dauermagneteinheit (20, 21; 23, 24) zwei Dauermagnetstücke (12¹, 12²) enthält, welche in dem Körper (6, 18) des Rotors paarweise benachbart angefügt sind, so dass sich ihre Spitzen (22; 22¹, 22²) einander zugewandt sind.

4. Dauermagnetsynchronmaschine nach einem der Ansprüche 1 bis 3, **dadurch gekennzeichnet, dass** die Dauermagnetstücke (12; 12³) in dem Körper (6, 18) des Rotors benachbart angefügt sind, so dass die Grundseiten (15; 15³, 15⁴) und die Spitzen (22; 22³, 22⁴) in entgegensetzte Richtungen zeigen.

5. Dauermagnetsynchronmaschine nach einem der vorhergehenden Ansprüche, **dadurch gekennzeichnet, dass** die Dauermagneteinheiten (10, 11; 16; 17; 20, 21; 23, 24; 12) in eine Auflagematrix (26) gefügt sind, die auf der Oberfläche des Rotorgehäuses (6, 18) angeordnet ist, wobei die Auflagematrix (26) durch ein nichtmagnetisches Material ausgeführt ist.

6. Dauermagnetsynchronmaschine nach Anspruch 5, **dadurch gekennzeichnet, dass** die Auflagematrix (26) aus einem elektrisch leitenden Material, bevorzugt Aluminium, hergestellt ist, und dass sie derart angeordnet ist, dass sie einen Teil der Dämpfungswindung der Maschine bildet.

7. Dauermagnetsynchronmaschine nach den Ansprüchen 5 oder 6, **dadurch gekennzeichnet, dass** oberhalb der Auflagematrix (26) und der Dauermagneteinheit (12; 12³, 12⁴) eine einheitliche Platte (29) oder dergleichen angefügt ist, welche aus einem nichtmagnetischen Material, besonders vorteilhaft einem elektrisch leitenden Material, vorteilhaft Aluminium oder Messing, hergestellt ist und welche angeordnet ist, um als die Dämpfungswindung der Maschine und/oder als der Schutz für das Dauermagnetmaterial zu dienen.

8. Dauermagnetsynchronmaschine nach einem der vorhergehenden Ansprüche, **dadurch gekennzeichnet, dass** der Körper (6) des Rotors eine scheibenähnliche Platte ist.

9. Dauermagnetsynchronmaschine nach einem der vorhergehenden Ansprüche, **dadurch gekennzeichnet, dass** der Körper (6) des Rotors zylindrisch ist.

## Revendications

1. Machine synchrone à aimants permanents triphasée comprenant un stator (1), un rotor (2) et un entrefer régulier (3) entre le stator et le rotor, ledit rotor (2) comprenant un corps (6, 18) réalisé en acier ou un matériau magnétique correspondant, et un certain nombre d'unités d'aimant permanent (10, 11 ; 16 ; 17 ; 20, 21 ; 23, 24 ; 12) qui comprennent une pièce d'aimant permanent (12 ; 12¹, 12²) comportant deux côtés opposés (13, 14), de telle sorte que l'épaisseur de pièce (p) entre les côtés soit une constante, et une base (15) dont la longueur, la longueur de l'unité d'aimant permanent, et, simultanément, la longueur de la pièce magnétique permanente dans la direction (x) de la circonférence du rotor (2), est une deuxième constante et correspond essentiellement à la longueur de pôle, les unités d'aimant étant magnétisées de telle sorte que les pôles (N, P) soient situés sur des côtés opposés (13, 14) et que lesdites unités d'aimant permanent soient disposées successivement sur la surface du corps (6, 18) avec leur côté pointé vers l'entrefer (3) et le stator (1) de telle sorte que les pôles (N, S) soient alternés tour à tour, **caractérisée en ce que** la ligne de bord (16) du côté (13, 14) de la pièce d'aimant permanent correspond à la forme de demi-cycle de la courbe sinusoïdale mélangée à une troisième harmonique de celle-ci.

2. Machine synchrone à aimants permanents selon la revendication 1, **caractérisée en ce que** chaque unité d'aimant permanent (10, 11 ; 16 ; 17) comprend deux pièces d'aimant permanent (12¹, 12²), qui sont disposées dans le corps de rotor (6, 18) de façon adjacente par paires, de telle sorte que leurs bases (15 ; 15¹, 15²) se fassent mutuellement face.

3. Machine synchrone à aimants permanents selon la revendication 1, **caractérisée en ce que** chaque unité d'aimant permanent (20, 21 ; 23, 24) comprend deux pièces d'aimant permanent (12¹, 12²), qui sont disposées dans le corps de rotor (6, 18) de façon adjacente par paires, de telle sorte que leurs pointes (22 ; 22¹, 22²) se fassent mutuellement face.

4. Machine synchrone à aimants permanents selon l'une quelconque des revendications 1 à 3, **caractérisée en ce que** les pièces d'aimant permanent (12 ; 12³) sont disposées dans le corps de rotor (6, 18) de façon adjacente, de telle sorte que les bases (15 ; 15³, 15⁴) et les pointes (22 ; 22³, 22⁴) pointent vers des directions opposées.

5. Machine synchrone à aimants permanents selon l'une quelconque des revendications précédentes, **caractérisée en ce que** les unités d'aimant permanent (10, 11 ; 16 ; 17 ; 20, 21 ; 23, 24 ; 12) sont disposées dans une matrice de support (26) qui est agencée sur la surface du boîtier de rotor (6, 18), ladite matrice de support (26) étant réalisée en un matériau non-magnétique quelconque.

6. Machine synchrone à aimants permanents selon la revendication 5, **caractérisée en ce que** la matrice de support (26) est réalisée en un matériau électriquement conducteur quelconque, de façon avantageuse de l'aluminium, et **en ce qu'**elle est agencée de façon à faire partie de l'enroulement amortisseur de la machine.

7. Machine synchrone à aimants permanents selon les revendications 5 ou 6, **caractérisée en ce que**, sur la matrice de support (26) et les unités d'aimant permanent (12 ; 12³, 12⁴), est disposée une plaque uniforme (29), ou analogue, qui est réalisée en un matériau non-magnétique quelconque, de la façon la plus avantageuse un matériau électriquement conducteur, de façon avantageuse de l'aluminium ou du laiton, et qui est agencée de façon à servir d'enroulement amortisseur de la machine et/ou de protection pour le matériau d'aimant permanent.

8. Machine synchrone à aimants permanents selon l'une quelconque des revendications précédentes, **caractérisée en ce que** le corps de rotor (6) est une plaque en forme de disque.

9. Machine synchrone à aimants permanents selon l'une quelconque des revendications précédentes, **caractérisée en ce que** le corps de rotor (6) est cylindrique.
